# EUROPEAN PATENT APPLICATION

(11) **EP 2 061 201 A1**
(43) Date of publication of application: **20.05.2009**
(21) Application number: 07120940.7
(22) Date of filing: 16.11.2007
(51) Int. Cl.: H04L 29/06, H04M 3/56, H04M 3/487, H04M 3/493, H04M 11/08

(54) **Method and system for enhancing a communication session with personalised ambience**

(71) Applicant: LUCENT TECHNOLOGIES INC., Murray Hill NJ 07974-0636 (US)
(72) Inventor: Van der Gaast, Sietse, 1271 PK, Huizen (NL)
(74) Representative: MERH-IP Matias Erny Reichl Hoffmann

(57) **Abstract**

The present invention relates to enhancing a communication session with ambience, in particular with background graphics, sound and noise. A method for enhancing a communication session over a communications network with ambience is provided. The method comprises receiving an ambience selection from a first user at a first user equipment (20-1); adding ambience data corresponding to the ambience selection to the communication session; and presenting the ambience data to a second user of the communication session at a second user equipment (20-2).

## Description

The present invention relates to enhancing a communication session with ambience, in particular with background graphics, sound and noise.

In audiovisual media both in entertainment (film), infotainment (news, documentaries) as well as commercials, the use of ambience (music, backdrop, color & sound scheme, etc.) is widely used, because it supports and enhances the emotion behind a message that is communicated and increases the impact on the end user. However, in communication sessions this potential is not yet used. Only personalized ringtones and choosing specific ringtones for persons who are calling are employed in wireless communication.

The Session Initialization Protocol (SIP) provides a signalling and call setup functionality for Internet Protocol based communications. SIP has been designed to enable the building of such features in network elements known as Proxy Servers and User Agents. These are features that permit familiar telephone-like operations: dialling a number, causing a phone to ring, hearing ringback tones or a busy signal. SIP is a peer-to-peer protocol. As such it requires only a very simple (and thus highly scalable) core network with intelligence distributed to the network edge, embedded in endpoints (terminating devices built in either hardware or software). SIP is further a client/server application protocol, where client applications send SIP request messages to create, change, or destroy a multimedia session. Server applications respond with one or more responses for each SIP request. Intermediary elements called SIP proxies help process and route SIP messages from/to SIP endpoints. Endpoints in a SIP signalling path are called User Agents (UA). An endpoint can play the role of a User Agent Client (UAC) when originating requests, or of a User Agent Server (UAS) as the destination of the request.

SIP works in concert with several other protocols and is involved in the signalling portion of a communication session. SIP acts as a carrier for the Session Description Protocol (SDP). In typical use, SIP "sessions" are packet streams of the Real-time Transport Protocol (RTP). RTP is the carrier for the actual voice or video content itself. SIP is similar to the hyper text transfer protocol (HTTP) and shares some of its design principles: It is text-based and request-response structured. SIP shares many HTTP status codes, such as the familiar '404 not found'. SIP is a stateless protocol, hence making it possible to easily implement failover and other features that are difficult in stateful protocols such as H.323. SIP and H.323 are not limited to voice communication but can mediate any kind of communication session from voice to video or future multimedia applications. SIP supports various end user devices having different media capabilities, ranging from simple phones to high end multi-media stations. However, a communication between such varying devices is limited to a common set of capabilities, e.g. voice-only functionality. Thus, the potential of 'high end' communication end user equipment is not used to the fullest when communicating with 'lower end' communication end user equipment.

According to an aspect of the invention, a separate ambience channel or a descriptor is added to a communication session for adding ambience information to the communication to enhance the acceptance of the communication at a user. Thus, ambience can be used to personalize a session environment in one-to-one and one-to-many communications.

Preferably, the actual communication and the added ambience are separated and transmitted in separate communication channels. Ambience data may be handled as one or more different media streams in addition to the media streams of the primary communication. This way the ambience can also be offered and added by network based application servers.

According to an aspect of the invention, a method for enhancing a communication session between users over a network with ambience is provided. The method comprises receiving an ambience selection from a first user at a first user equipment, adding ambience data corresponding to the ambience selection to the communication session; and presenting the ambience data to a second user of the communication session at a second user equipment. Thus, the user experience for the communication session is enhanced. The ambience data may comprise, for example, image data such as graphics, video data, audio data, and/or background noise data. By providing the ambience data to a user of the communication session, such as an audio communication, the communication is extended to include additional media for adding an atmospheric background.

The ambience data may be transmitted from a first user equipment to a second user equipment in a separate channel of the communication session. Thus, the normal communication is not disturbed by the ambience data and the user of the second user equipment can control the presentation of the ambience data, .e.g., switching the presentation of ambience data on/off, adjusting the volume of audio/noise background, etc. According to another aspect of the invention, the ambience data is transmitted to a plurality of second user equipments, e.g., in a telephone conference environment.

The communication session may be controlled by the Session Initiated Protocol, SIP, in which case the communication session would be established between two or more SIP user agents. The present invention is, however, not limited to SIP communication sessions and may be applied to other communication sessions/protocols as well.

Preferably, a first user selects an ambience descriptor which identifies ambience data. The first user may be the session initiator, for instance a calling party in a SIP session. The selected ambience descriptor might then be transmitted from the first user's terminal to the user equipment of a second user where ambience data is generated based upon the received ambience descriptor. The ambience descriptor may comprise characteristic information on the ambience data which allows the ambience data to be generated at the second user equipment. For instance, the ambience descriptor comprises characteristic information to generate background noise (e.g. noise type, spectral shape, mean, variance, etc.), MIDI sequences for driving a synthesizer to generate background music, geometric data defining a background picture, etc.

Alternatively, the ambience descriptor may comprise an ambience identifier for retrieval of ambience data from a database. The database may be stored locally on the second user equipment or at a server in the network where the second user equipment can access the selected ambience data by means of the received identifier. The usage of an ambience descriptor has the advantage that only a reduced amount of data is transmitted and the ambience data which might be voluminous is generated.

According to another aspect of the invention, the ambience descriptor is transmitted from the first user's terminal to an ambience media server where the ambience data is generated based on the ambience descriptor. As explained above, the ambience descriptor may comprise characteristic information for synthesizing ambience data on the server, or an ambience identifier for access to an ambience database that may be stored at the ambience media server. Having the media server generating the ambience data in response to the ambience descriptor reduces the computational and storage load from the user equipment(s). Further, a central ambience data repository simplifies maintenance of ambience data and allows service providers to offer new services. The media server may be public so that all users can share the stored ambience data. Alternatively or in addition, the media server may be personalized and individually used by subscribers. For instance, a user may upload pictures and sounds to a private section of the ambience media server and use the corresponding ambience descriptors for referring to his personal ambience data.

Ambience data generated or retrieved at the ambience media server is then transmitted to the user equipment of at least a second user for presentation. The transmission may be unicast to a single user or multicast to multiple users sharing the same ambience data, e.g. determined by the initiator of a conference call. The transmission of the ambience data is preferably on a separate channel in addition to the regular communication. This is particularly advantageous in a multi-user environment as each individual user may decide whether to accept the presentation of the ambience data and may adjust the presentation modalities such as volume, size, etc.

According to another aspect of the invention, the second user equipment first receives default ambience data from the media server when a communication session is established so that ambience data is immediately available for presentation to the second user. Second, possibly more detailed ambience data, e.g. having a higher resolution and a larger data size than the default ambience data, is subsequently transmitted to the second user equipment for later presentation when completely available at the second user equipment, i.e. when completely received. Thus, the communication session can commence with a presentation of ambience data to the second user which presentation is refined with improved ambience date at a later point in time. As an example, a picture with a coarse resolution is presented first and substituted with a higher resolution picture when this is available at the second user equipment. This two-step approach has a particular advantage when the bandwidth from the media server to the second user equipment is low and it will take some time until the high resolution ambience data is transmitted to the second user equipment.

A further aspect of the invention relates to a download of first ambience data, possibly with a small size, from the media server to the second user equipment and a subsequent transmission of second ambience data from the first user equipment to the second user equipment for replacing the first ambience data in presentation to the second user. The second ambience data may be of larger size so that the transmission - e.g. via a low bandwidth channel - takes a longer time and is completed only after the communication session has already started. The presentation of the first ambience data will then be used to bridge the gap between the start of the session and the complete arrival of the second ambience data, which is particular useful when some communication links are low bandwidth, e.g. using wireless technology.

According to an embodiment, the first ambiance data is default data assigned to the first user, e.g. a first picture that is stored at the media server which is presented to the second user when a call commences. The second ambiance data may be a second picture that has been captured at the second user equipment and stored thereon. The second picture is then transmitted - possibly via the media server or directly - to the second user equipment and there displayed once it has completely arrived. Thus, the communication session starts without delay in presenting (default) ambiance data which is later updated with (specific) ambiance data selected by the first user. According to an implementation, the first user deposits default ambiance data at the media server, which is presented until the actually selected ambiance data is available at the second user equipment.

According to an aspect of the invention, an ambience enhanced communication system comprising a plurality of user terminals in a communication network is provided. At least two user terminals in the communication system are connected by a communication session and at least one user terminal is configured to present ambience data that has been selected by a user of the other of the at least two user terminals to a user of the at least one user terminal. An ambience media server for generating ambience data based on a received ambience descriptor and transmitting the generated ambience data to the at least one user terminal for presentation may be provided in the network.

An ambience media server according to the invention may comprise an ambience descriptor receiving component for receiving an ambience descriptor from a user terminal via the communication network; an ambience generator for generating ambience data depending on the received ambience descriptor; and an ambience data sending component to send the generated ambience date to another user terminal in the network. The users in this scenario are connected through a communication session which provides for an exchange of primary communication data.

An end user equipment according to the invention may comprise a communication unit for communicating with another end user equipment; an ambience data selector for allowing a user to select ambience data; an ambience descriptor transmission unit for sending and receiving an ambience descriptor identifying ambience data; and an ambiance data presentation unit for adding ambience data to a communication session in response to a received ambience descriptor.

Preferably, the end user equipment comprises ambience data output means for presenting the ambience data to the terminal user. The ambience data output means may comprise a display unit for presenting visual ambience data such as graphics, video, and background pictures. The ambience data output means may also comprise a sound presentation unit for playing audio, background noise, etc. The ambience data may be in the same media type as the primary communication data, e.g. background music for a voice communication. The ambience data may extend the communication to an additional medium, too. For instance, a voice communication may be enhanced with a picture that is displayed on a user terminal.

The present invention is particular useful for communications between end user terminals having different media capabilities. For example in a communication between a voice-only user equipment and a multi-media terminal, graphical ambience data may be added for the multi-media terminal for presentation to the user of the equipment with graphic capabilities.

The objects and features of the invention will become apparent from the following description of preferred embodiments. The present invention is described in the following by referring to exemplary embodiments illustrated schematically in the accompanying figures, wherein
Fig. 1 shows schematically a scenario for ambience enhanced communication according to an embodiment of the invention; and
Fig. 2 shows schematically a functional block diagram of an embodiment of the invention.

An aspect of the present invention is a combination of multimedia identity presentation and the addition of personalized ambience and information to SIP communication sessions. An embodiment relates to a network-based service comprising an end-user manageable mix of enhanced identification and features related to mood, atmosphere and ambience, using sound and visual background effects to be added to the communication.

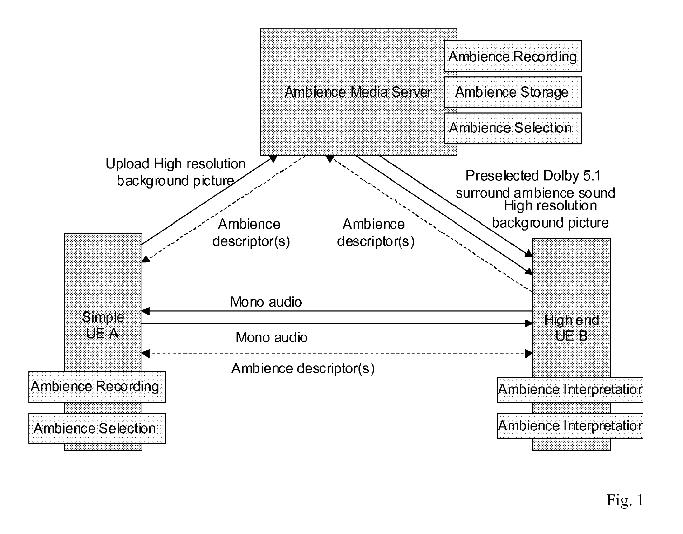

Fig. 1 illustrates an example of functional entities that can be used to implement an embodiment of the invention. In this example, a person calling with an end user device (UE A) with limited capabilities (for instance a mobile device) calls someone with an end user device (UE B) with many capabilities (for instance a living room setting with Dolby 5.1 capabilities and a large television screen).

A user can select ambience settings for the communication session by using ambience descriptors. The ambience settings can be set on a default or on a per call basis. This way the session initiator, user A, can enhance the call with ambience like a nice high definition background picture on user B's HD TV screen, and/or nice background music or appropriate background noise. User B may also select an ambience descriptor for presentation on UE A. In case of a restricted capabilities device B, the choices may, however, be limited to, e.g., low resolution picture for display on the mobile device B, or background noise for being added to the speech output on device B's speaker.

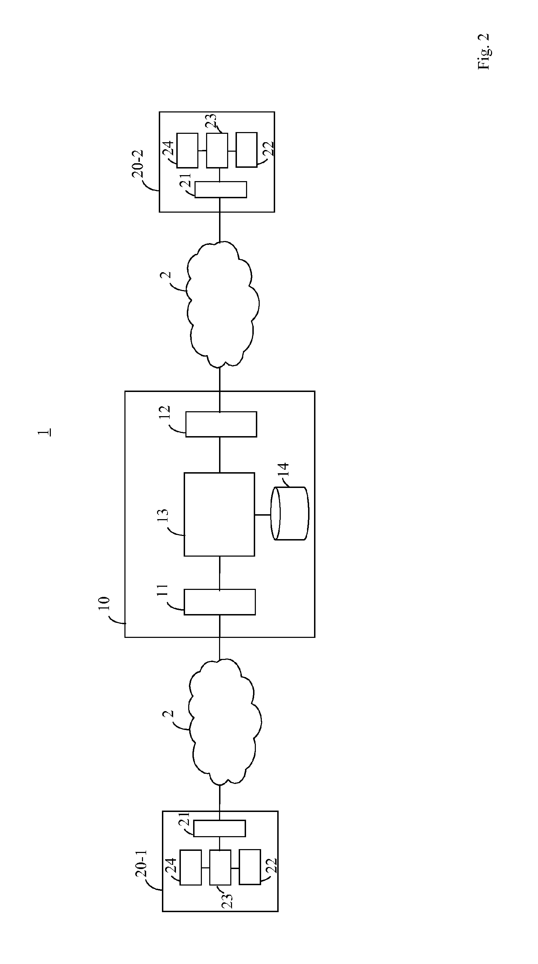

Fig. 2 shows schematically an embodiment of the invention. A communication system 1 comprises an ambience media server 10, end user equipments 20-1, 20-2, and a communication network 2.

The ambience media server 10 comprises an ambience descriptor receiving component 11 for receiving an ambience descriptor from a user terminal 20-1 via the communication network 2. Further is provided an ambience generator 13 for generating ambience data depending on the received ambience descriptor and an ambience data sending component 12 to send the generated ambience date to another user terminal 20-2 in the network 2. The ambience data is synthesized based on the received ambience descriptor or generated by accessing an ambience database 14.

The end user equipments 20-1, 20-2 comprise a communication unit 21 for communicating with other end user equipments. Further provided are an ambience data selection component 22 for allowing a user to select ambience data, an ambience descriptor transmission unit 23 for sending and receiving an ambience descriptor identifying ambience data and an ambiance data presentation unit 24 for adding ambience data to a communication session in response to a received ambience descriptor from another user terminal or an ambience media server 10.

The present invention has many advantages. It allows offering an enhanced experience for users of high end user equipment, even when communicating with low end user equipment. This way it may entice the uptake of IMS. The invention further offers a way to add more emotion to sessions and voice mails. It will bring new appealing trusted, network located services, thus, an opportunity for offering new services for service providers. The invention further provides a combination with/ enhancement of personalized user identity services.

This written description uses examples to disclose the invention, including the best mode, and also to enable any person skilled in the art to make and use the invention. While the invention has been described in terms of various specific embodiments, those skilled in the art will recognize that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art.

## Claims

1. Method for enhancing a communication session over a communications network with ambience, comprising:
receiving an ambience selection from a first user at a first user equipment (20-1);
adding ambience data corresponding to the ambience selection to the communication session; and
presenting the ambience data to a second user of the communication session at a second user equipment (20-2).

2. Method of claim 1, wherein the ambience data is transmitted from the first user equipment (20-1) to the second user equipment (20-2) in a separate channel of the communication session.

3. Method of claim 2, wherein first ambiance data is received at the second user equipment (20-2) from an ambience media server (10) and presented to the second user before second ambience data corresponding to the ambience selection is received at the second user equipment (20-2) and presented to the second user.

4. Method of claim 1, wherein the first user selects an ambience descriptor which identifies the ambience data, the method further comprising:
transmitting the selected ambience descriptor to the user equipment (20-2) of the second user or an ambience media server (10) where the ambience data is generated based on the ambience descriptor.

5. Method of claim 1, comprising:
generating the ambience data at an ambience media server (10); and
transmitting the generated ambience data to at least one user equipment (20) for presentation.

6. Method of claim 1, wherein the ambience data comprises at least one of image data, video data, audio data, and background noise data.

7. Method of claim 1, wherein the communication session is based on the Session Initiated Protocol, SIP.

8. Communication system (1) comprising a plurality of user terminals (20) in a communication network (2), wherein at least two user terminals (20-1, 20-2) are connected in a communication session and at least one user terminal (20-2) is configured to present ambience data that has been selected by a user of the other (20-1) of the at least two user terminals to a user of the at least one user terminal (20-2).

9. Communication system of claim 8, comprising an ambience media server (10) for generating ambience data based on a received ambience descriptor and transmitting the generated ambience data to the at least one user terminal (20) for presentation.

10. Ambience media server (10) for a communication network (2) comprising:
an ambience descriptor receiver (11) for receiving an ambience descriptor from a user terminal (20-1) via the communication network (2);
an ambience generator (13) for generating ambience data depending on the received ambience descriptor; and
an ambience data sender (12) to send the generated ambience date to another user terminal (20-2).

11. Network end user equipment (20) comprising:
a communications unit (21) for communicating with another end user equipment;
an ambience data selector (22) for allowing a user to select ambience data;
an ambience descriptor transmission unit (23) for sending and receiving an ambience descriptor that identifies ambience data; and
an ambiance data presentation unit (24) for adding ambience data to a communication session in response to a received ambience descriptor.

## Amended claims

### Amended claims in accordance with Rule 137(2) EPC.

**1.** Method for enhancing a communication session between a first user equipment (20-1) and a second user equipment (20-2) having different media capabilities over a communications network with ambience, comprising:
receiving an ambience descriptor identifying ambience data from a first user at the first user equipment (20-1), wherein the ambience descriptor is limited to the media capabilities of the second user equipment (20-2);
transmitting the ambience descriptor to an ambience media server (10) where ambience data is generated based on the ambience descriptor;
adding the ambience data corresponding to the ambience descriptor to the communication session; and
presenting the ambience data to a second user of the communication session at the second user equipment (20-2).

**2.** Method of claim 1, wherein the ambience data is transmitted from the first user equipment (20-1) to the second user equipment (20-2) in a separate channel of the communication session.

**3.** Method of claim 2, wherein first ambiance data is received at the second user equipment (20-2) from the ambience media server (10) and presented to the second user before second ambience data corresponding to the ambience descriptor is received at the second user equipment (20-2) and presented to the second user.

**4.** Method of claim 1, wherein the ambience data comprises at least one of image data, video data, audio data, and background noise data.

**5.** Method of claim 1, wherein the communication session is based on the Session Initiated Protocol, SIP.

**6.** Communication system (1) comprising a plurality of user terminals (20) in a communication network (2), wherein at least two user terminals (20-1, 20-2) with different media capabilities are connected in a communication session and at least one user terminal (20-2) is configured to present ambience data that has been selected by a user of the other (20-1) of the at least two user terminals to a user of the at least one user terminal (20-2), wherein the selected ambience data is limited to the media capabilities of the at least one user terminal (20-2) and wherein the Communication system (1) further comprises an ambience media server (10) for generating ambience data based on a received ambience descriptor and transmitting the generated ambience data to the at least one user terminal (20-2) for presentation.

**7.** Ambience media server (10) for a communication network (2) comprising a first user terminal (20-1) and a second user terminal (20-2) having different media capabilities, the ambience media server (10) comprising:
an ambience descriptor receiver (11) for receiving an ambience descriptor from the first user terminal (20-1) via the communication network (2), wherein the ambience descriptor is limited to the media capabilities of the second user terminal (20-2);
an ambience generator (13) for generating ambience data depending on the received ambience descriptor; and
an ambience data sender (12) to send the generated ambience date to the second user terminal (20-2).

**8.** Network end user equipment (20) comprising:
a communications unit (21) for communicating with a second end user equipment having different media capabilities;
an ambience data selector (22) for allowing a user to select ambience data to be sent to the second end user equipment from a media server (10), wherein the ambience data is limited to the media capabilities of the second end user equipment;
an ambience descriptor transmission unit (23) for sending and receiving an ambience descriptor that identifies ambience data; and
an ambiance data presentation unit (24) for adding ambience data generated by the media server (10) to a communication session in response to a received ambience descriptor.
